# EUROPEAN PATENT SPECIFICATION

(11) **EP 1 113 693 B1**
(45) Date of publication and mention of the grant of the patent: **24.03.2004**
(21) Application number: 00939107.9
(22) Date of filing: 21.06.2000
(51) Int. Cl.: H04Q 7/38, H04B 7/005, H04B 7/26

(54) **BASE STATION DEVICE AND METHOD FOR PREVENTING DEGRADATION OF CIRCUIT QUALITY**
BASISSTATIONSGERÄT UND VERFAHREN ZUR VERBINDUNG DES VERSCHLECHTERUNG DER VERBINDUNGSQUALITÄT
DISPOSITIF DE STATION DE BASE ET PROCEDE DE PREVENTION DE LA DEGRADATION DE LA QUALITE DU CIRCUIT

(30) Priority: 09.07.1999 JP 19628299
(43) Date of publication of application: 04.07.2001
(73) Proprietor: Matsushita Electric Industrial Co., Ltd., Kadoma-shi, Osaka 571-8501 (JP)
(72) Inventor: SUMASU, Atsushi, Yokosuka-shi, Kanagawa 239-0833 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: PCT/JP2000/004043
(87) International publication number: WO 2001/005183

(56) References cited:
- EP-A2- 0 472 511
- WO-A1-95/07578

## Description

### Technical Field

The present invention relates to a base station and a method for prevention of channel quality degradation in a digital radio communication system.

### Background Art

A CDMA (Code Division Multiple Access) method is one of multiple access technologies, with which a plurality of stations simultaneously communicate with each other at the same time at the same frequency band in mobile communication through, for example, car telephones and cell telephones. Though a FDMA (Frequency Division Multiple Access) method, a TDMA (Time Division Multiple Access) method and so on have been known as other technologies, the CDMA method is a method with higher frequency efficiency, and has a capability to accommodate more users, comparing with those of the above other technologies.

In the CDMA method, a signal of a certain user is an interference signal to other users, and signals of other users are interference signals to the above user, too, as a plurality of users commonly use the same frequency band. Therefore, a SIR (Signal to Interference Ratio) is configured to be constant, regardless of the locations of mobile stations in order to obtain uniform communication quality in one service area (cell).

However, there are sometimes caused large amount of interference at each user terminal (communication terminal) to bring about smaller SIRs of received signals than a value of the SIR necessary for required quality, when a lot of users communicate in one cell, and when even small number of users perform high-rate communication in the CDMA communication system.

In the case of downlinks for transmission of signals from a base station to each communication terminal, each communication terminal in one cell requests increase in the transmission power to the base station in order to improve its own SIR when the SIR of the received signals is insufficient for the required quality. In such a case, the base station increases the transmission power for one communication terminal according to the request so as to increase interference with other communication terminals, and, consequently, all other communication terminals request the increase in the transmission power to the base station.

Therefore, each communication terminal requests further increase in the transmission power to the base station, as the SIRs are not improved as a necessary consequence. But the SIRs remain in a not improved state for the above reason. When the above circumstances are repeated, there is caused the maximum transmission power from the base station to each communication terminal, and the quality of all the downlinks is degraded without improving the SIRs.

In the case of uplinks for transmission of signals from each communication terminal to the base station, the base station requests increase in the transmission power to each communication terminal when the SIRs of the received signals from each communication terminal are insufficient for the required quality. In such a case, each communication terminal increases the transmission power according to the above request so as to increase interference between each other,

Therefore, the base station requests further increase in the transmission power to each communication terminal, as the SIRs are not improved as a necessary consequence. But the SIRs remains in a not improved state for the above reason. When the above circumstances are repeated, there is caused the maximum transmission power from each communication terminal to the base station, and the quality of all the uplinks is degraded without improving the SIRs.

WO-A1-95/07578 discloses a method and apparatus for controlling the data rates for communications to and from a base station and a plurality of remote users. The usage of the communication resource including the forward link (downlink) and the reverse link (uplink) is measured. The measured usage value is compared against at least one predetermined threshold value, and the data rates of communications on the communications resource is modified in accordance with the comparison.

### Disclosure of Invention

The object of the present invention is to provide a base station, which may previously prevent degradation of channel quality, and a method for prevention of channel quality degradation.

The inventors of the present invention have made the present invention based upon the fact that they have focused on the fact that the quality as the whole system is not degraded when a ratio of the number of communication terminals with sufficient channel quality for the required quality to the total number of the communication terminals is equal to that of the number of the above terminals with the insufficient quality for the above quality to the total one, and an average quality as the whole system is gradually degraded when the ratio of the communication terminals with the insufficient quality for the required quality is larger than that of the ones with the sufficient quality for the required quality; and they have found that the degradation on the channel quality may be previously prevented by reduction in the transmission rate of communication terminals with reducible transmission rate, after previous detection of the ratio of communication terminals insufficient for the required quality.

The subject of the present invention is to realize favorable radio communication by previous prevention of degradation of the channel quality through reduction in the required quality of users by reduction in the transmission rate of the user (with reducible transmission) performing high-rate transmission, when it is judged that there may be a possibility of the quality degradation on the uplinks or downlinks, while the base station is monitoring all the requests of transmission power from communication terminals in one cell, or measuring the received quality of signals from the communication terminals.

Here, the communication terminal with reducible transmission rate denotes, for example, a communication terminal performing communication, such as packet communication, where there may be permitted transmission delay; or a communication terminal performing communication, which may be executed in a half rate mode, even in a case where the transmission delay is not permitted like voice communication.

### Brief Description of Drawings

FIG. 1 shows a block diagram of a configuration of a base station according to an embodiment 1 of the present invention;
FIG. 2 shows a block diagram of a configuration of a communication terminal performing radio communication with the base station according to the above embodiment of the present invention;
FIG. 3 shows an explanatory flowchart of operations of the base station according to the above embodiment of the present invention;
FIG. 4 shows a block diagram of a configuration of a base station according to an embodiment 2 of the present invention;
FIG. 5 shows a block diagram of a configuration of a communication terminal performing radio communication with the base station according to the above embodiment of the present invention; and
FIG. 6 shows an explanatory flowchart of operations of the base station according to the above embodiment of the present invention.

### Best Mode for Carrying Out the Invention

Hereinafter, embodiments of the present invention will be described in detail, referring to attached drawings.

### (Embodiment 1)

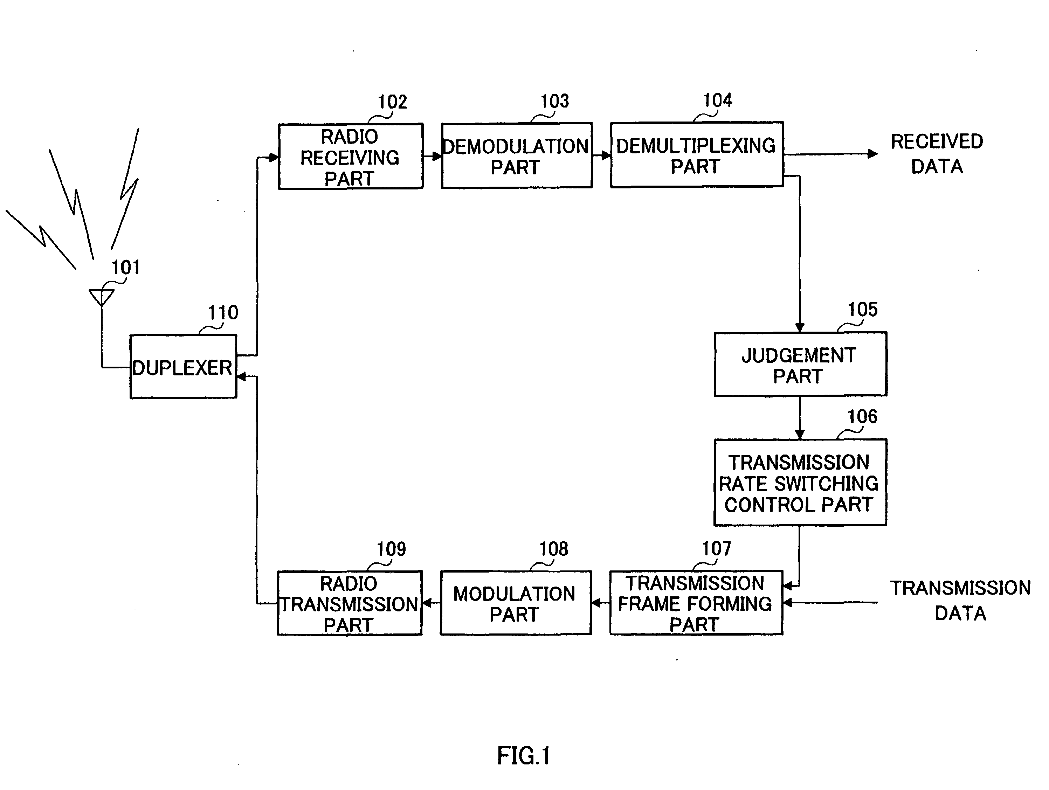

In the present embodiment, a case for prevention of quality degradation on a downlink will be described. FIG. 1 shows a block diagram of a configuration of a base station according to an embodiment 1 of the present invention,
A signal transmitted from a communication end is received at a radio receiving part 102 through a duplexer 110 after passing through an antenna 101. The radio receiving part 102 performs amplification (gain control), down conversion, and A/D (analog to digital) conversion for the received signal. The signal after the above A/D conversion is fed to a demodulation part 103, and then to a demultiplexing part 104 after demodulation.

The demultiplexing part 104 demultiplexes the demodulated signal to acquire received data and quality information. The acquired quality information is fed to a judgement part 105. The above quality information is, for example, a SIR value, a BER (Bit Error Rate) value, and a transmission power control signal, which are measured at a communication terminal. The judgement part 105 judges, according to the quality information, whether the quality of the whole downlinks is degraded or not. The above judged results are fed to a transmission rate switching control part 106.

The transmission rate switching control part 106 feeds a control signal for reduction in the transmission rate of the transmission data, which may reduce the transmission rate, to a transmission frame forming part 107, based on the judged results.

The transmission frame forming part 107 forms transmission frame from the transmission data. The transmission frame forming part 107 extracts the transmission data which may reduce the transmission rate; and reduces the transmission rate of the above transmission data, when the control signal for reduction in the transmission rate is received from the transmission rate switching control part 106.

The transmission data after frame formation is fed to a modulation part 108 for modulation, and thereafter to a radio transmission part 109 which performs D/A (digital to analog) conversion, up conversion, and amplification (gain control) for the modulated signal. Such a processed signal is transmitted as a transmission signal through the antenna 101 after passing through the duplexer 110.

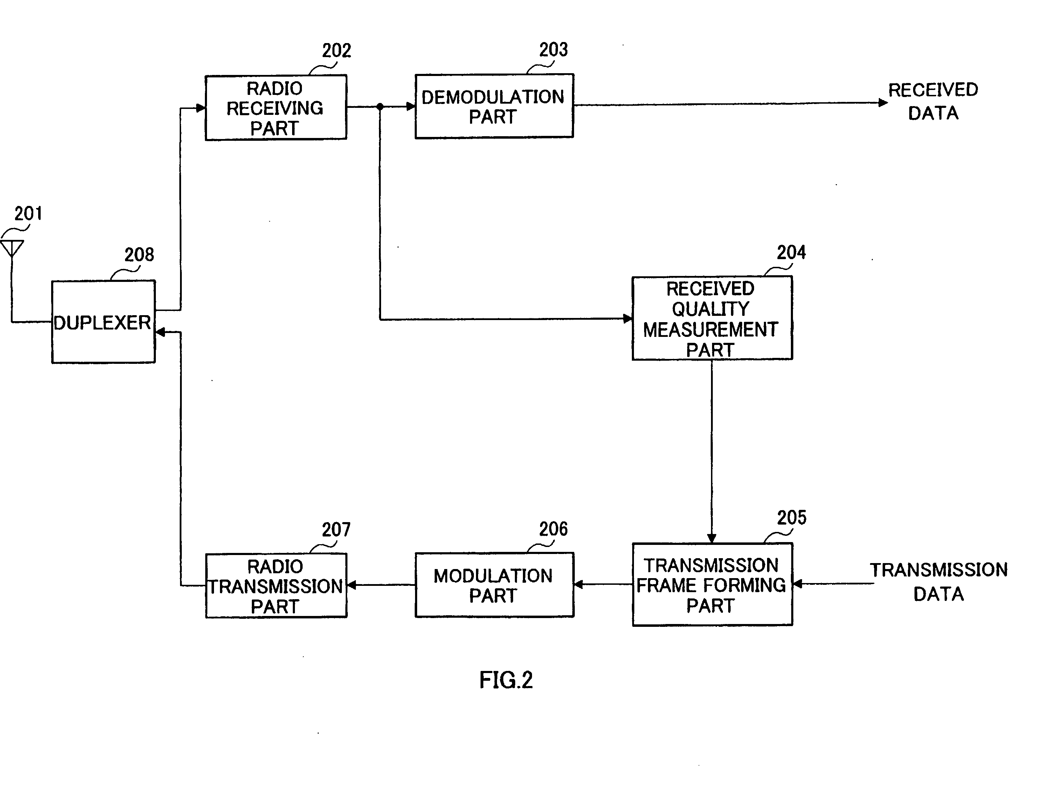

FIG. 2 shows a block diagram of a configuration of a communication terminal performing radio communication with the base station according to the embodiment 1 of the present invention.

A signal transmitted from the communication end is received at a radio receiving part 202 through a duplexer 208 after passing through an antenna 201 which performs amplification (gain control), D/A conversion, down conversion, and A/D conversion for the received signal. The above signal after the A/D conversion is fed to a received quality measurement part 204.

The received quality measurement part 204 measures the received quality, for example, SIR, BER, and FER (Frame Error Rate) of the received signal, and feeds the measured results as quality information to a transmission frame forming part 205. At this time, the received quality measurement part 204 generates a TPC bit (Transmission Power Control signal), based on the results of the received quality measurement for feeding to a transmission frame forming part 205, when the TPC bit is fed as received quality to the base station.

The transmission frame forming part 205 forms the transmission frame for the transmission data, and the transmission data with a configuration of the transmission frame are fed to a modulation part 206, where the transmission data are modulated and fed to a radio transmission part 207. The above part 207 performs D/A conversion, up conversion, and amplification (gain control) for the received signal. Such a processed signal is transmitted as a transmission signal through the antenna 201 after passing through the duplexer 208.

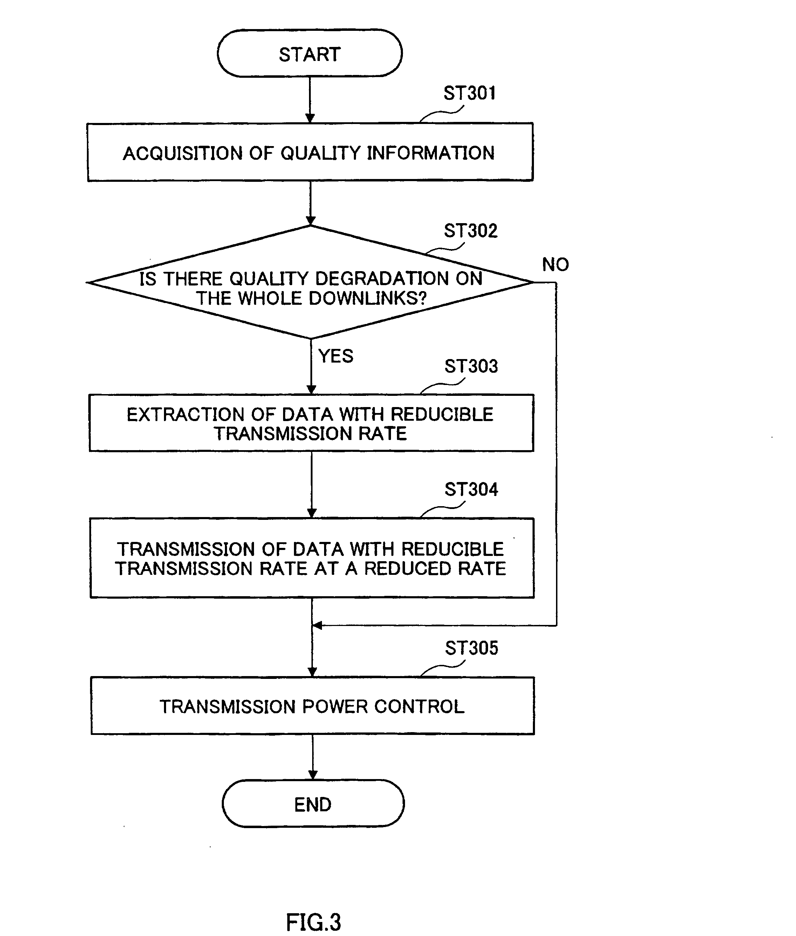

The operations of the base station, and the communication terminal with the above configuration will be described for prevention of degradation on downlink quality, referring to a flowchart in FIG. 3.

In the communication terminal, the received quality of signals received from the base station is measured at the received quality measurement part 204, after predetermined processing for radio communication.

The above measured results of the received quality are fed as quality information to the transmission frame forming part 205. When a TPC bit is used as the above quality information, a TPC bit to increase or reduce the transmission power is generated, based on the above measured results, and fed to the frame forming part 205 which forms the transmission frame, using the transmission data. The transmission signal obtained above is fed to the base station. The above operations are performed in all the communication terminals.

In the base station, the signal received from each communication terminal is demodulated in the demodulation part 103, after predetermined processing for radio communication, and fed to the demultiplexing part 104, the quality information is demultiplexed for acquisition. When the quality information is the TPC bit, the TPC bit is extracted (ST301).

Then, the acquired quality information is fed to the judgement part 105 and used for judgement of whether there is a possibility for the quality of the whole downlinks to be degraded, or not (ST302). The judgement at the above judgement part 105 is performed by monitoring whether there are large majority of communication terminals with poor quality of the signal transmitted on the downlink from the base station. When there are large majority of communication terminals with poor quality of the signal transmitted on the downlink from the base station, it is judged that there is a possibility to degrade the quality of the whole downlinks, and data, which may reduce the transmission rate, are transmitted after reduction in the transmission rate.

There may be listed as monitoring methods, for example, a method to count the number of communication terminals which transmit quality information less than a predetermined standard value, or a TPC bit to increase the transmission power for checking whether the counted value exceeds a predetermined value or not; and a method to calculate the ratio of the number of communication terminals, which transmit quality information less than a predetermined standard value, or a TPC bit to increase the transmission power, to all the communication terminals under communication for checking whether the calculated value exceeds a predetermined value or not.
Moreover, in the monitoring method, weighting may be configured to be used according to the transmission rate under communication for calculation of the number of communication terminals transmitting quality information less than the predetermined standard value. For example, when a communication terminal transmitting quality information less than a predetermined standard value is a communication terminal with a transmission rate of four times the basic transmission rate, the above terminal is configured to be calculated as four communication terminals. Thereby, it may be possible to exactly monitor the possibility of the quality degradation on the downlinks, and to accurately prevent the quality degradation on the downlinks beforehand.
When it is judged at the judgement part 105 that there is a possibility that the quality of the whole downlinks is degraded, the transmission rate switching control part 106 extracts the data with reducible transmission rate from the transmission data (ST303), and feeds the transmission frame forming part 107 with a control signal for transmission of the extracted data at a reduced transmission rate.

The transmission frame forming part 107 forms the transmission frame so as to reduce the transmission rate of the data with reducible transmission rate, according to the control signal (ST304). There may be the following methods as methods for reduction in the transmission rate: for example, the transmission rate of communication terminals which may reduce the transmission rate may be uniformly reduced to a specific transmission rate, when the control signal for instruction to reduce the transmission rate is received; the current transmission rate of communication terminals which may reduce the transmission rate may be reduced at a specific ratio, when the control signal for instruction to reduce the transmission rate is received; and the transmission rate may be reduced to a corresponding rate according to instruction by a configuration where a plurality of control signals, which are transmitted from the base station, for instruction to reduce the transmission rate are provided, and different transmission rates are allocated to the plurality of the above control signals, respectively.

And the transmission data after frame forming are transmitted after the transmission power control to reduce the transmission rate (ST305). On the other hand, transmission is performed by usual transmission power control (ST305), when it is judged in the judgement part 105 that there is no possibility to degrade the quality of the whole downlinks.

Therefore, in the above control, the control for increase of the transmission power is not performed, and the transmission rate of the data which may reduce the transmission rate is configured to be reduced, if reduction in the transmission rate is required. On the other hand, when there is no need to reduce the transmission rate, the transmission power is controlled as usual.
Here, there may be listed as setting methods for transmission power at the base station after reduction in the transmission rate, for example, a method for transmission at transmission power considering the traffics of all the provided terminals after reduction in the transmission rate; a method for transmission at transmission power, which is reduced by a predetermined value from the transmission power before reducing, or at the same transmission power with the pre-change one, or a method for transmission at transmission power, which is reduced by a predetermined value from the transmission power requested by a communication terminal.

By the above method according to the present embodiment, interference to other communication terminals in one cell may be controlled, and the quality degradation on the downlinks may be previously prevented, as the transmission rates of data which may reduce the transmission rate are reduced, when there is a possibility to degrade the quality of the whole downlinks. Thereby, favorable radio communication may be realized between the base station and the communication terminals.

### (Embodiment 2)

In the present embodiment, a case for prevention of quality degradation on a uplink will be described.

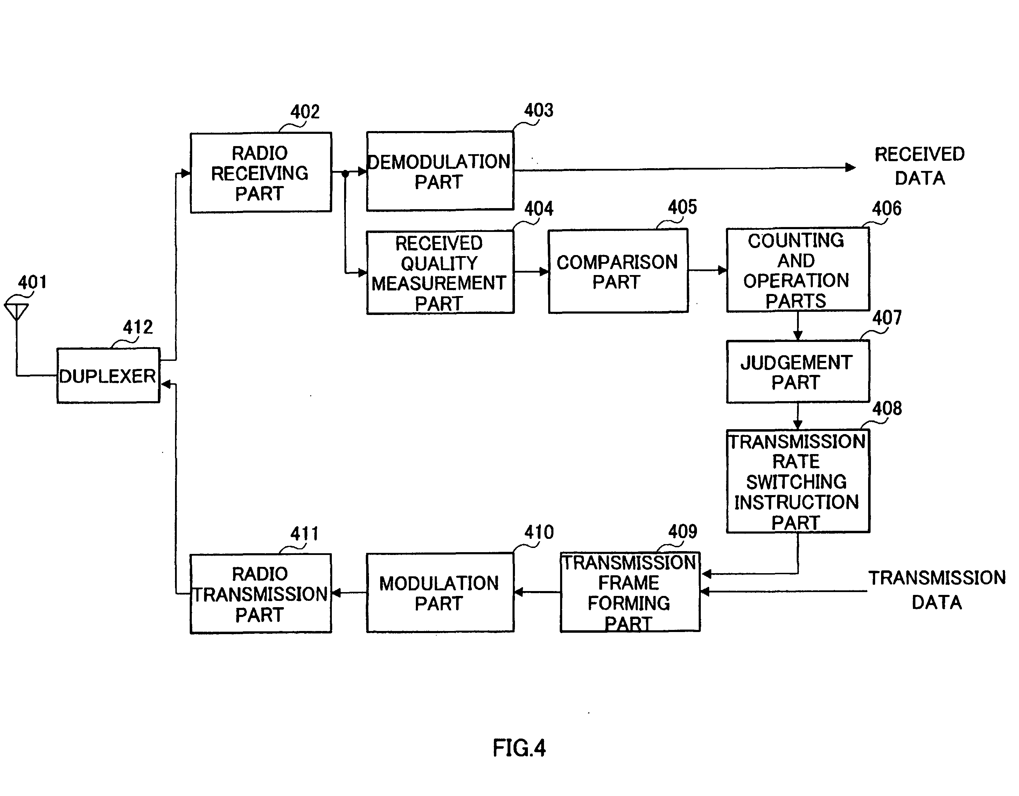

FIG. 4 shows a block diagram of a configuration of the communication terminal according to an embodiment 2 of the present invention.

A signal transmitted from the communication end is received at a radio receiving part 402 through a duplexer 412 after passing through an antenna 401. The radio receiving part 402 performs amplification (gain control), up conversion, and A/D conversion, for the received signal. The signal after the above A/D conversion is fed to a demodulation part 403, and demodulated to be received data.

Moreover, the signal which is processed in a predetermined manner at the radio receiving part 402 is fed to a received quality measurement part 404 for measurement of the received quality, for example, SIR. The measured results of the above received quality are fed to a comparison part 405 for comparison with a standard value of the received quality.

The above comparison results are fed to a counting and operation part 406, where the number of communication terminals with the received quality, which does not exceed a standard value, is counted. That is, the number of received signals with the received quality which does not exceed a standard value, among the received signals from each communication terminal in the cell, is counted, as the base station receives signals from many communication terminals in one cell.
The above counted results are fed to a judgement part 407, where judgement of the number of communication terminals with the received quality not exceeding the standard value, that is, the number of communication terminals with poor uplink quality is performed. The above judgement is made for checking whether the transmission rate is required to be reduced or not, based on a possibility of degradation of the uplink quality. The above judged results are fed to a transmission rate switching instruction part 408.

In the above transmission rate switching instruction part 408, a control signal to reduce the transmission rate of the communication terminal which may reduce the transmission rate is fed to a transmission frame forming part 409, if the transmission rate is required to be reduced. In the above transmission frame forming part 409, data for instruction to reduce the transmission rate is inserted to the transmission frame for communication terminals, which may reduce the transmission rate, according to the control signal. For example, one bit denoting the presence of the instruction to reduce the transmission rate may be included in the transmission frame, and there may be given individual instruction to reduce the transmission rate in several reducing steps such as 1/2, 1/4, and 1/8, according to the current transmission rate.

Moreover, in the transmission frame forming part 409, a transmission frame is formed from transmission data and, if required, data including a control data for transmission rate switching instruction, and fed to a modulation part 410, where the transmission frame is modulated and fed to a radio transmission part 411, which performs D/A conversion, up conversion, and amplification (gain control), for the modulated signal. Such a processed signal is transmitted as a transmission signal through the antenna 401 after passing through the duplexer 412.

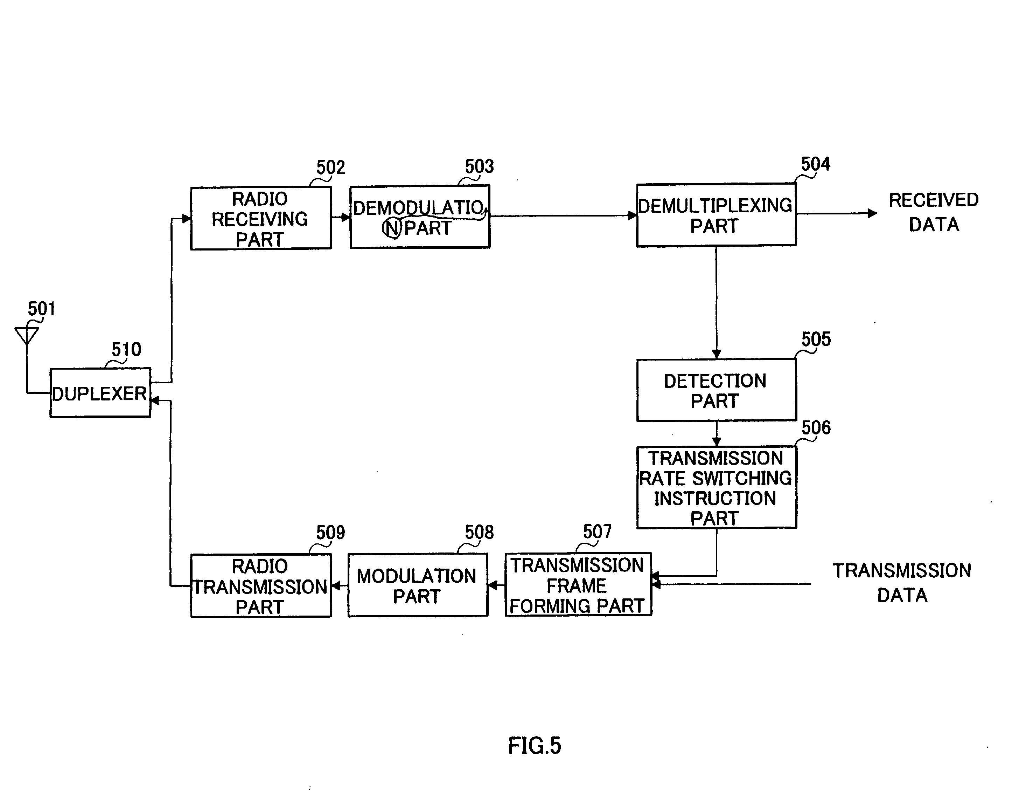

FIG. 5 shows a block diagram of a configuration of a communication terminal performing radio communication with the base station according to the embodiment 2 of the present invention.
The signal transmitted from a communication end is received at a radio receiving part 502 through a duplexer 510 after passing through an antenna 501. The above radio receiving part 502 performs amplification (gain control), down conversion, and A/D conversion, for the received signal. The signal after the above A/D conversion is fed to a demultiplexing part 504, after demodulation at a demodulation part 503.

The demultiplexing part 504 demultipexes the demodulated signal to received data, and data for instruction to reduce the transmission rate. The demultiplexed data is fed to a detection part 505, where the instruction to reduce the transmission rate is detected.

The above detection results are fed to a transmission rate switching control part 506, where switching of the transmission rate is controlled, based on the detection results. For example, the transmission rate switching control part 506 controls to reduce the transmission rate, if the instruction to reduce the transmission rate is detected. According to the above control, a transmission frame forming part 507 forms a frame so as to reduce the transmission rate.

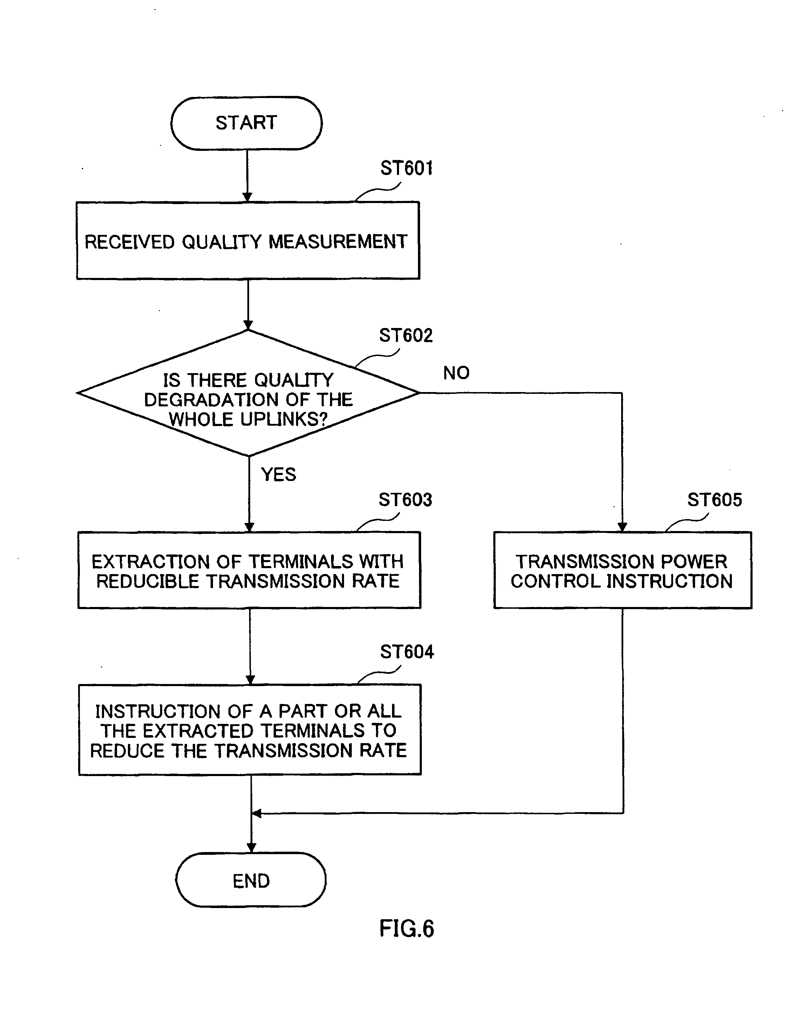

The operations of the base station, and the communication terminal with the above configuration will be described for prevention of degradation on the downlink quality, referring to a flowchart in FIG. 6.

The received quality of signals which the base station receives from a plurality of communication terminals is measured at the received quality measurement part 404 after predetermined processing for radio communication (ST601). Here, SIR is used for the received quality, and the above received quality measurement part 404 is configured to measure SIR of the received signals. The measured SIR results are fed to the comparison part 405.

Then, it is judged based on the above measured SIR results whether there is a possibility to degrade the quality of the whole uplinks (ST602). The above judgement is performed by monitoring whether there are large majority of communication terminals with poor quality of the signals transmitted on the uplinks, and executed at the comparison part 405, the counting and operation part 406, and the judgement part 407.

When there are large majority of communication terminals with poor quality of the signals transmitted on the uplinks, it is judged that there is a possibility to degrade the quality of the whole uplinks, and communication terminals which may reduce the transmission rate are instructed to reduce the transmission rate.

There may be listed as monitoring methods, for example, a method to count the number of communication terminals which transmit signals with quality less than a predetermined standard value, and to check whether the counted value exceeds a predetermined value or not; and a method to calculate the ratio of communication terminals, which transmit signals with quality less than a predetermined standard value, to all the communication terminals under communication, and to check whether the calculated value exceeds a predetermined value or not.

Moreover, in the monitoring method, weighting according to the transmission rate under communication may be used for calculation of the number of communication terminals transmitting signals with quality less than the predetermined value. For example, when a communication terminal transmitting signals with quality less than a predetermined standard value has a transmission rate of four times the basic transmission rate, the above terminal is calculated as four communication terminals. Thereby, it may be possible to exactly monitor the possibility of the quality degradation on the uplinks, and to accurately prevent the quality degradation on the uplinks beforehand.

For example, in one example of the monitoring methods, the measured SIR result is compared with a predetermined standard value at the comparison part 405, and, when the above SIR is smaller than the standard value, the counting value of the counting and operation part 406 is changed by one increment as a communication terminal with poor uplink quality. The above comparisons and countings are performed for all the communication terminals under communication.

The judgement part 407 judges by comparison of the counting value and a predetermined value whether there is a possibility to degrade the uplink quality. It is judged that there is a possibility to degrade the uplink quality, as there are larger number of communication terminals with poor uplink quality than the predetermined one, if the counting value is larger than the predetermined value.

In the above case, the transmission rate switching instruction part 408 instructs the transmission frame forming part 409 to switch the transmission rate. The base station may extract communication terminals which have a reducible transmission rate, that is, which may reduce the transmission rate, as the above station knows the transmission rates of each communication terminals under communication. Therefore, when an instruction from the transmission rate switching instruction part 408 to switch the transmission rate is fed to the transmission frame forming part 409, a communication terminal which may reduce the transmission rate is extracted (ST603), and a part of, or all of the extracted communication terminals are required to reduce the transmission rate (ST604). Specifically, a transmission rate switching instruction signal is inserted into a transmission frame for a communication terminal with a reducible transmission rate. On the other hand, when there is no possibility to degrade the quality of the whole uplinks, the communication terminals are required to perform usual transmission power control (ST605).

The communication terminals with a reducible transmission rate are configured to reduce the transmission rate, according to the transmission rate switching instruction signals from the base station. There may be the following methods as methods for reduction in the transmission rate: for example, the transmission rate of communication terminals which may reduce the transmission rate may be uniformly reduced to a specific transmission rate, when the control signal for instruction to reduce the transmission rate is received; the current transmission rate of communication terminals which may reduce the transmission rate may be reduced at a specific ratio, when the control signal for instruction to reduce the transmission rate is received; and the transmission rate may be reduced to a corresponding rate according to an instruction by a configuration where a plurality of control signals, which are transmitted from the base station, for instruction to reduce the transmission rate are provided, and different transmission rates are allocated to the plurality of the above control signals, respectively.

As described above, communication terminals with reducible transmission rate are configured to be instructed to reduce the transmission rate, if there is required to reduce the transmission rate in the above control. On the other hand, usual transmission power control is performed, when there is no need to reduce the transmission rate.

Here, there may be roughly two setting methods for transmission power at a communication terminal after reduction in the transmission rate, that is, a method for the communication terminal to set the transmission power; and a method for the base station to do it.

There are methods for the communication terminal to set the transmission power after reduction in the transmission rate, such as a transmission method at the same transmission power with the previous one before the reduction in the above rate; and a transmission one at a transmission power reduced by a predetermined value from the previous power before the reduction.

And, in another method for the base station to set the transmission power, the base station instructs the communication terminal to reduce the transmission rate, and, at the same time, gives it an instruction on a transmission power; and then the above terminal follows the above instruction on the transmission power from the base station. In the above case, the base station may give the communication terminal the instruction on the transmission power, considering the traffics of the whole terminals after reduction in the transmission rate of the above terminal; and may give the above terminal the instruction on the transmission power, which is reduced by a predetermined value from the previous transmission power before the reduction in the transmission rate, or which is the same transmission power with the previous one before the above reduction.

By the method according to the present embodiment, which is described above, interference to other terminals in one cell may be controlled, and the quality degradation on the downlinks may be previously prevented, as the transmission rate is instructed to be reduced for communication terminals which may reduce the transmission rate, when there is a possibility to degrade the quality of the whole uplinks. Thereby, favorable radio communication may be realized between the base station and the communication terminals.

In some case, the channel quality degradation may independently occur on the uplink from the one on the downlink, like an asymmetric communication service where the transmission rate of the uplink and that of the downlink are different from each other. In such a case, independent control of the uplink from that of the downlink. The methods for prevention of channel quality degradation according to the above embodiments 1 and 2 may prevent quality degradation caused independently on the uplink from that of the downlink, and vice versa, by previous detection of a possibility of degradation, even if there is a possibility to cause it.

The proper combination of the above embodiments 1 and 2 may be performed. That is, when it is judged that there is a possibility to degrade the quality of either the whole downlinks or the whole uplinks, it is configured that the one method for prevention of the channel quality degradation for the corresponding links is performed, and, at the same time, the other method for the other links is also executed.

Specifically, for the downlinks, data with reducible transmission rate are instructed to reduce the transmission rate, and, for the uplinks, communication terminals with reducible transmission rate are done so, when it is judged that there is a possibility to degrade the quality of the whole downlinks. Moreover, for the uplinks, communication terminal with reducible transmission rate are instructed to reduce the transmission rate, and, for the downlinks, data with reducible transmission rate are done so, when it is judged that there is a possibility to degrade the quality of the whole uplinks.

The above control may previously prevent the quality degradation on both uplinks and downlinks in a more reliable manner.

The present invention is not limited to the above embodiments, and various kinds of variations may be possible. For example, the present invention may be applied to the TDMA method and so on, without limiting to the CDMA method. Moreover, the received quality measurement part may be configured to perform quality measurement of data after demodulation, when other parameters such as a data error rate such as BER and FER are used for the received quality in the present invention.

The base station according to the present invention has a configuration comprising: a quality information acquisition part to acquire quality information from signals including the above quality information received from a plurality of communication terminals; a monitoring part to monitor quality degradation on the whole downlinks, using the acquired quality information; and a transmission rate switching control part for control to reduce the transmission rate of transmission data with reducible transmission rate, when the quality degradation on the whole downlinks is monitored.

There may be no increased interference with each other according to the above configuration, as SIRs requested at each communication terminal are reduced and increase in the transmission power is not required. Therefore, previous prevention of the quality degradation on the whole downlinks may be realized, and favorable radio communication may be also achieved between the base station and the communication terminals.

The base station according to the present invention with the above configuration has a configuration where the above monitoring part comprises: a counting part to count the number of communication terminals transmitting the quality information less than a predetermined standard value; and a judgement part to judge that there is a possibility of the quality degradation on the whole downlinks, when the counted value with the above counting part exceeds a predetermined value.

The base station according to the present invention with the above configuration has a configuration where the above counting part comprises weighting means to cause an weighted number of the communication terminals according to the transmission rate.

According to the above configurations, it may be possible to exactly monitor the possibility of the quality degradation on the downlinks, and to accurately prevent the quality degradation on the downlinks beforehand.

The base station according to the present invention with the above configuration has a configuration where the above transmission rate switching control part controls to reduce the transmission rate of transmission data with reducible transmission rate, and to comprise a transmission rate switching instruction part to instruct communication terminals with reducible transmission rate for reduction in the transmission rate.

The above configuration may previously prevent the quality degradation on both uplinks and downlinks in a more reliable manner.

The base station according to the present invention has a configuration where it comprises: a received quality measurement part to measure received quality of signals received from a plurality of communication terminals; a monitoring part to monitor quality degradation on the whole uplinks, using the measurement results of the received quality; and a transmission rate switching instruction part for instruction to reduce the transmission rate of communication terminals with reducible transmission rate, when the quality degradation on the whole uplinks is monitored.

According to the above configuration, interference to other terminals in one cell may be controlled. Therefore, previous prevention of the quality degradation on the whole uplinks may be realized, and favorable radio communication may be also achieved between the base station and the communication terminals.

The base station according to the present invention with the above configuration has a configuration where the above monitoring part comprises: a counting part to count the number of communication terminals with the quality information less than a predetermined standard value; and a judgement part to judge that there is a possibility of the quality degradation on the whole uplinks, when the counted value with the above counting part exceeds a predetermined value.

The base station according to the present invention with the above configuration has a configuration where the above counting part comprises weighting means to cause an weighted number of the communication terminals according to the transmission rate.

According to the above configurations, it may be possible to exactly monitor the possibility of the quality degradation on the uplinks, and to accurately prevent the quality degradation on the uplinks beforehand.

The base station according to the present invention with the above configuration has a configuration where the above transmission rate switching instruction part instructs communication terminals with reducible transmission rate to reduce the transmission rate, and the above station comprises a transmission rate switching control part for control to reduce the transmission rate of transmission data with reducible transmission rate.

The above configuration may previously prevent the quality degradation on both uplinks and downlinks in a more reliable manner.

The communication terminals according to the present invention comprises: a detection part to detect an instruction signal for reduction in the transmission rate from signals, which are received from the base station, including the above instruction signal; and a transmission rate switching part to switch the transmission rate according to the above instruction signal.

According to the above configuration, the transmission rate may be reduced by an instruction from the base station, and the degradation of the quality of the whole uplinks may be prevented, when there is a possibility to degrade the quality of the whole uplinks.

The method for prevention of the channel quality degradation according to the present invention has a configuration comprising: a quality information acquisition step to acquire quality information from signals, which are received at the base station from a plurality of communication terminals, including the above quality information; a monitoring step to monitor quality degradation on the whole downlinks, using the above acquired quality; and a transmission rate switching control step for control to reduce the transmission rate of transmission data with reducible transmission rate, when the quality degradation on the whole downinks is monitored.

According to the present method, interference to other terminals in one cell may be controlled. Therefore, previous prevention of the quality degradation on the whole downlinks may be realized, and favorable radio communication may be also achieved between the base station and the communication terminals.

In the method for prevention of the channel quality degradation according to the present invention, the above monitoring step comprises: a counting step to count the number of communication terminals transmitting the quality information less than a predetermined standard value; and a judgement part to judge that there is a possibility of the quality degradation on the whole downlinks, when the counted value with the above counting step exceeds a predetermined value.

In the method for prevention of the channel quality degradation according to the present invention, the above monitoring step comprises: a counting step to count the number of communication terminals transmitting the quality information less than a predetermined standard value; and a judgement part to judge that there is a possibility of the quality degradation on the whole downlinks, when the counted value with the above counting step exceeds a predetermined value.
In the method for prevention of the channel quality degradation according to the present invention, the above transmission rate switching control step controls to reduce the transmission rate of transmission data with reducible transmission rate, and the above method comprises a transmission rate switching instruction step to instruct communication terminals with reducible transmission rate for reduction in the transmission rate.
The above method may previously prevent the quality degradation on both uplinks and downlinks in a more reliable manner.
In the method for prevention of the channel quality degradation according to the present invention, there are performed at the base station a received quality measurement step to measure received quality of signals received from a plurality of communication terminals; a monitoring step to monitor quality degradation on the whole uplinks, using the measurement results of the received quality; and a transmission rate switching instruction step for instruction to reduce the transmission rate of communication terminals with reducible transmission rate, when the quality degradation on the whole uplinks is monitored. On the other hand, at the communication terminals a detection step to detect the above instruction signal; and a transmission rate switching control step for switching of the transmission rate according to the above instruction signal.

According to the above method, there may be no increased interference with each other, as SIR requested at the base station is reduced and increase in the transmission power is not required. Therefore, previous prevention of the quality degradation on the whole uplinks may be realized, and favorable radio communication may be also achieved between the base station and the communication terminals.

In the method for prevention of the channel quality degradation according to the present invention, the above monitoring step comprises: a counting step to count the number of communication terminals with received quality less than a predetermined standard value; and a determination step to judge that there is a possibility of the quality degradation on the whole uplinks, when the counted value with the above counting step exceeds a predetermined value.

In the method for prevention of the channel quality degradation according to the present invention, the above counting step comprises: an weighting step to cause an weighted number of the communication terminals according to the transmission rate.

According to the above methods, it may be possible to exactly monitor the possibility of the quality degradation on the uplinks, and to accurately prevent the quality degradation on the uplinks beforehand.
In the method for prevention of the channel quality degradation according to the present invention, the above transmission rate switching instruction step instructs communication terminals with reducible transmission rate to reduce the transmission rate, and the above method comprises a transmission rate switching control step for control to reduce the transmission rate of transmission data with reducible transmission rate.

The above method may previously prevent the quality degradation on both uplinks and downlinks in a more reliable manner.

As described above, the base station and the method for prevention of the channel quality degradation according to the present invention, may previously prevent the channel quality degradation to realize favorable radio communication, as the required quality by users is reduced by reduction in the transmission rate (reducible one) of the users performing high-rate transmission, when it is judged that there may be a possibility of the quality degradation on the uplinks or downlinks, while the base station is monitoring all the quality information from communication terminals in one cell, or measuring the received quality of signals from the communication terminals.

### Industrial Applicability

The present invention is applicable to a base station and communication terminals in digital radio communication system.

## Claims

1. A base station apparatus, which communicates with those communication terminals having a reducible transmission rate at a lower transmission rate when the quality of all communications under the control of said base station apparatus degrades, comprising:
communication means (101, 102, 109, 110, 401, 402, 411, 412) that communicates with a plurality of communication terminals;
judging means (105, 405, 406, 407) that receives the acquired quality information and determines whether a ratio of communications with insufficient quality to all communications under control of the base station apparatus exceeds a predetermined ratio, using the information on the quality of each communication acquired from the demultiplexing part (104) in case of the downlink rate control or from the received quality measurement part (404) in case of the uplink rate control;
transmission rate switching control means (106, 408) that
a) outputs a control signal to its transmission frame forming part (107) for the transmission of the data at a reduced transmission rate in case of the downlink rate control, when the ratio of communications with insufficient quality exceeds the predetermined ratio; and/or
b) selects communication terminals having a reducible transmission rate and outputs a control signal to instruct their transmission at a reduced transmission rate in case of the uplink rate control, when the ratio of communications with insufficient quality exceeds the predetermined ratio;
**characterized by**
quality information acquiring means (104, 404) that acquires information on the quality of each communication with the plurality of communication terminals, wherein
a) in case of the downlink rate control, the base station receives the signal indicating the downlink quality transmitted by each communication terminal, demultiplexes and extracts the demodulated signal, and acquires the downlink quality information (SIR, BER, PER); a TPC (Transmission Power Control) bit is used as the downlink quality information indicator, the TPC bit included in the received signal is extracted after demultiplexing the received signal, and the base station acquires the downlink quality information through the extracted TPC bit; and/or
b) in case of the uplink rate control, the base station receives the signal transmitted by each communication terminal through the radio receiving part (402) and acquires the uplink quality information through measuring the quality (e.g. SIR) of the received signal in its received quality measurement part (404).

2. The base station apparatus according to claim 1, wherein said judging means further comprises:
counting means (406) that counts the number of communication terminals communicating at a quality level below a predetermined standard; and
ratio judging means (407) that determines whether the number of communication terminals communicating at a quality level below a predetermined standard exceeds a predetermined value, and from that result determines whether the ratio of communications with a degraded quality with respect to all communications under control of the base station apparatus exceeds the predetermined ratio.

3. The base station apparatus according to claim 1 or 2, wherein said counting means (406) assigns weight to the number of communication terminals according to the transmission rate.

4. A communication terminal apparatus that communicates with the base station apparatus of one of claims 1 to 3, comprising:
detecting means (505) that detects a control signal transmitted from the base station apparatus to instruct to reduce the transmission rate in case of the uplink rate control;
transmission rate switching instruction means (506) that switches the transmission rate of a transmission signal in compliance with the instruction of the control signal in case of the uplink rate control;
**characterized by**
downlink quality measuring means (204) that measures the received downlink quality (e.g. SIR, BER, PER) of a signal transmitted from the base station apparatus, generates a TPC bit according to the results of the received downlink quality measurement, and outputs the TPC bit to the transmission frame forming part (205) so that a transmission frame including the TPC bit is formed and transmitted to the base station.

5. A method for preventing channel quality degradation, comprising the steps of:
a communicating step of communicating with a plurality of communication terminals;
a judging step of determining whether a ratio of communications with insufficient quality to all communications under control of the base station apparatus exceeds a predetermined ratio, using the information on the quality of each communication acquired from the demultiplexing part (104) in case of the downlink rate control or from the received quality measurement part (404) in case of the uplink rate control;
a transmission rate switching control step of
a) outputting a control signal to its transmission frame forming part (107) for the transmission of the data at a reduced transmission rate in case of the downlink rate control, when the ratio of communications with insufficient quality exceeds the predetermined ratio; and/or
b) selecting communication terminals having a reducible transmission rate and outputs a control signal to instruct their transmission at a reduced transmission rate in case of the uplink rate control, when the ratio of communications with insufficient quality exceeds the predetermined ratio;
**characterized by**
a quality information acquiring step of acquiring information on the quality of each communication with the plurality of communication terminals, wherein
a) in case of the downlink rate control, the base station receives the signal transmitted by each communication terminal, demultiplexes the demodulated signal, and acquires the downlink quality information (SIR, BER, FER); a TPC (Transmission Power Control) bit is used as the downlink quality information indicator, the TPC bit included in the received signal is extracted after demultiplexing, and the base station acquires the downlink quality information through the extracted TPC bit; the TPC bit is generated in each communication terminal according to the results of the received downlink quality measurement and output to the transmission frame forming part (205) of each communication terminal so that a transmission frame including the TPC bit is formed and transmitted to the base station; and/or
b) in case of the uplink rate control, the base station receives the signal transmitted by each communication terminal through the radio receiving part (402) and acquires the uplink quality information through measuring SIR, BER or FER of the received signal in its received quality measurement part (404).

6. The method according to claim 5, wherein said judging step further comprises the steps of:
a counting step of counting the number of communication terminals communicating at a quality level below a predetermined standard; and
a determining step of determining whether the number of communication terminals communicating at a quality level below a predetermined standard exceeds a predetermined value, and from that result determines whether the ratio of communications with a degraded quality with respect to all communications under control of the base station apparatus exceeds the predetermined ratio.

7. The method according to claim 5 or 6, wherein said counting step further comprises an assigning step of assigning weight to the number of communication terminals according to the transmission rate.

## Patentansprüche

1. Basisstations-Vorrichtung, die mit den Kommunikations-Endgeräten, die eine verringerbare Übertragungsgeschwindigkeit haben, bei einer niedrigeren Übertragungsgeschwindigkeit kommuniziert, wenn die Qualität aller Kommunikationen, die von der Basisstations-Vorrichtung gesteuert werden, abnimmt, und die umfasst:
eine Kommunikationseinrichtung (101, 102, 109, 110, 401, 402, 411, 412), die mit einer Vielzahl von Kommunikations-Endgeräten kommuniziert;
eine Entscheidungseinrichtung (105, 405, 406, 407), die die gewonnenen Qualitäts-Informationen empfängt und unter Verwendung der Informationen über die Qualität jeder Kommunikation, die im Fall der Downlink-Geschwindigkeitssteuerung von dem Demultiplexier-Teil (104) oder im Fall der Uplink-Geschwindigkeitssteuerung von dem Empfangsqualitäts-Messteil (404) ermittelt werden, feststellt, ob ein Verhältnis von Kommunikationen mit unzureichender Qualität zu allen Kommunikationen, die von der Basisstations-Vorrichtung gesteuert werden, ein vorgegebenes Verhältnis übersteigt;
eine Übertragungsgeschwindigkeitswechsel-Steuereinrichtung (106, 408), die:
a) im Fall der Downlink-Geschwindigkeitssteuerung ein Steuersignal an ihren Übertragungsrahmen-Ausbildungsteil (107) zur Übertragung der Daten mit einer verringerten Übertragungsgeschwindigkeit ausgibt, wenn das Verhältnis von Kommunikationen mit unzureichender Qualität das vorgegebene Verhältnis übersteigt, und/oder
b) im Fall der Uplink-Geschwindigkeitssteuerung Kommunikations-Endgeräte mit einer verringerbaren Übertragungsgeschwindigkeit auswählt und ein Steuersignal ausgibt, um ihre Übertragung mit einer verringerten. Übertragungsgeschwindigkeit anzuweisen, wenn das Verhältnis von Kommunikationen mit unzureichender Qualität das vorgegebene Verhältnis übersteigt;
**gekennzeichnet durch**:
eine Qualitätsinformations-Gewinnungsei nrichtung (104, 404), die Informationen über die Qualität jeder Kommunikation mit der Vielzahl von Kommunikations-Endgeräten gewinnt, wobei:
a) im Fall der Downlink-Geschwindigkeitssteuerung die Basisstation das die Downlink-Qualität anzeigende Signal empfängt, das von jedem Kommunikations-Endgerät übertragen wird, das demodulierte Signal demultiplexiert und extrahiert und Downlink-Qualitätsinformationen (SIR, BER, FER) gewinnt, wobei ein TPC (Transmission Power Control-Übertragungsleistungssteuerung)-Bit als Indikator der Downlink-Qualitätsinformationen verwendet wird und das TPC-Bit, das in dem empfangenen Signal enthalten ist, nach Demultiplexieren des empfangenen Signals extrahiert wird, und die Basisstation die Downlink-Qualitätsinformationen über das extrahierte TPC-Bit gewinnt; und/oder
b) im Fall der Uplink-Geschwindigkeitssteuerung die Basisstation das von jedem Kommunikations-Endgerät übertragene Signal über den Funkempfangs-Teil (402) empfängt und die Uplink-Qualitätsinformationen **durch** Messen der Qualität (z.B. SIR) des empfangenen Signals in ihrem Empfangsqualitäts-Messteil (404) gewinnt.

2. Basisstations-Vorrichtung nach Anspruch 1, wobei die Entscheidungseinrichtung des Weiteren umfasst:
eine Zähleinrichtung (406), die die Anzahl von Kommunikations-Endgeräten zählt, die auf einem Qualitätsniveau unter einem vorgegebenen Standard kommunizieren; und
eine Verhältnis-Entscheidungseinrichtung (407), die feststellt, ob die Anzahl von Kommunikations-Endgeräten, die auf einem Qualitätsniveau unter einem vorgegebenen Standard kommunizieren, einen vorgegebenen Wert übersteigt und anhand dieses Ergebnisses feststellt, ob das Verhältnis von Kommunikationen mit einer verschlechterten Qualität in Bezug auf alle Kommunikationen, die von der Basisstations-Vorrichtung gesteuert werden, das vorgegebene Verhältnis übersteigt.

3. Basisstations-Vorrichtung nach Anspruch 1 oder 2, wobei die Zähleinrichtung (406) der Anzahl von Kommunikations-Endgeräten entsprechend der Übertragungsgeschwindigkeit Gewichtung zuweist.

4. Kommunikations-Endgerätvorrichtung, die mit der Basisstations-Vorrichtung nach einem der Ansprüche 1 bis 3 kommuniziert und die umfasst:
eine Erfassungseinrichtung (505), die im Fall der Uplink-Geschwindigkeitssteuerung eine Steuersignal erfasst, das von der Basisstations-Vorrichtung übertragen wird, um die Verringerung der Übertragungsgeschwindigkeit anzuweisen;
eine Übertragungsgeschwindigkeitwechsel-Anweisungseinrichtung (506), die im Fall der Uplink-Geschwindigkeitssteuerung die Übertragungsgeschwindigkeit eines Übertragungssignals entsprechend der Anweisung durch das Steuersignal umschaltet;
**gekennzeichnet durch:**
eine Downlink-Qualitätsmesseinrichtung (204), die die Downlink-Empfangsqualität (z.B. SIR, BER, FER) eines von der Basisstations-Vorrichtung übertragenen Signals misst, entsprechend den Ergebnissen der Downlink-Empfangsqualitätsmessung ein TPC-Bit erzeugt und das TPC-Bit an den Übertragungsrahmen-Ausbildungsteil (205) ausgibt, so dass ein Übertragungsrahmen einschießlich des TPC-Bit ausgebildet und zu der Basisstation übertragen wird.

5. Verfahren zum Verhindern von Kanal-Qualitätsverschlechterung, das die folgenden Schritte umfasst:
einen Kommunikationsschritt, bei dem mit einer Vielzahl von Kommunikations-Endgeräten kommuniziert wird;
einen Entscheidungsschritt, bei dem unter Verwendung der Informationen über die Qualität jeder Kommunikation, die im Fall der Downlink-Geschwindigkeitssteuerung von dem Demultiplexier-Teil (104) oder im Fall der Uplink-Geschwindigkeitssteuerung von dem Empfangsqualitäts-Messteil (404) gewonnen werden, feststellt, ob ein Verhältnis von Kommunikationen mit unzureichender Qualität zu allen Kommunikationen, die von der Basisstations-Vorrichtung gesteuert werden, ein vorgegebenes Verhältnis übersteigt;
einen Übertragungsgeschwindigkeitswechsel-Steuerschritt, bei dem:
a) im Fall der Downlink-Geschwindigkeitssteuerung ein Steuersignal an ihren Übertragungsrahmen-Ausbildungsteil (107) zur Übertragung der Daten mit einer verringerten Übertragungsgeschwindigkeit übertragen wird, wenn das Verhältnis von Kommunikationen mit unzureichender Qualität das vorgegebene Verhältnis übersteigt; und/oder
b) im Fall der Uplink-Geschwindigkeitssteuerung Kommunikations-Endgeräte mit einer verringerbaren Übertragungsgeschwindigkeit auswählt werden und ein Steuersignal ausgegeben wird, um ihre Übertragung bei einer verringerten Übertragungsgeschwindigkeit anzuweisen, wenn das Verhältnis von Kommunikationen mit unzureichender Qualität das vorgegebene Verhältnis übersteigt;
**gekennzeichnet durch**:
einen Qualitätsinformations-Gewinnungsschritt, bei dem Informationen über die Qualität jeder Kommunikation mit der Vielzahl von Kommunikations-Endgeräten gewonnen werden, wobei:
a) im Fall der Downlink-Geschwindigkeitssteuerung die Basisstation das von jedem Kommunikations-Endgerät übertragene Signal empfängt, das demodulierte Signal demultiplexiert und die Downlink-Qualitätsinformationen (SIR, BER, FER) gewinnt, wobei ein TPC (Transmission Power Control-Übertragungsleistungssteuerung)-Bit als der Indikator der Downlink-Qualitätsinformationen verwendet wird und das TPC-Bit, das in dem empfangenen Signal enthalten ist, nach Demultiplexieren extrahiert wird und die Basisstation die Downlink-Qualitätsinformationen über das extrahierte TPC-Bit gewinnt, das TPC-Bit in jedem Kommunikations-Endgerät entsprechend den Ergebnissen der Downlink-Empfangsqualtiätsmessung erzeugt wird und an den Übertragungsrahmen-Ausbildungsteil (205) jedes Kommunikations-Endgerätes ausgegeben wird, so dass ein Übertragungsrahmen, der das TPC-Bit enthält, ausgebildet und zu der Basisstation übertragen wird; und/oder
b) im Fall der Uplink-Geschwindigkeitssteuerung die Basisstation das von jedem Kommunikations-Endgerät übertragene Signal über den Funkempfangs-Teil (402) empfängt und die Uplink-Qualitätsinformationen **durch** Messung von SIR, BER oder FER des empfangenen Signals in ihrem Empfangsqualitäts-Messteil (404) gewinnt.

6. Verfahren nach Anspruch 5, wobei der Entscheidungsschritt des Weiteren die folgenden Schritte umfasst:
einen Zählschritt, bei dem die Anzahl von Kommunikations-Endgeräten gezählt wird, die auf einem Qualitätsniveau unter einem vorgegeben Standard kommunizieren; und
einen Feststellschritt, bei dem festgestellt wird, ob die Anzahl von Kommunikations-Endgeräten, die auf einem Qualitätsniveau unter einem vorgegebenen Standard kommunizieren, einen vorgegebenen Wert übersteigt, und anhand dieses Ergebnisses festgestellt wird, ob das Verhältnis von Kommunikationen mit einer verschlechterten Qualität in Bezug auf alle Kommunikationen, die von der Basisstations-Vorrichtung gesteuert werden, das vorgegebene Verhältnis übersteigt.

7. Verfahren nach Anspruch 5 oder 6, wobei der Zählschritt des Weiteren einen Zuweisungsschritt umfasst, bei dem der Anzahl von Kommunikations-Endgeräten entsprechend der Übertragungsgeschwindigkeit Gewichtung zugewiesen wird.

## Revendications

1. Dispositif de station de base qui communique avec les terminaux de communication présentant un débit de transmission réductible à un débit de transmission inférieur lorsque la qualité de toutes les communications sous la commande dudit dispositif de station de base se dégrade, comprenant :
un moyen de communication (101, 102, 109, 110, 401, 402, 411, 412) qui communique avec une pluralité de terminaux de communication,
un moyen d'évaluation (105, 405, 406, 407) qui reçoit les informations de qualité acquises et détermine si un taux de communications de qualité insuffisante sur toutes les communications sous la commande du dispositif de station de base dépasse un taux prédéterminé, en utilisant les informations sur la qualité de chaque communication acquises à partir de la partie de démultiplexage (104) dans le cas de la commande de débit de liaison descendante ou à partir de la partie de mesure de qualité reçue (404) dans le cas de la commande de débit de liaison montante,
un moyen de commande de commutation de débit de transmission (106, 408) qui
a) fournit en sortie un signal de commande à sa partie de formation de trame de transmission (107) pour la transmission des données à un débit de transmission réduit dans le cas de la commande de débit de liaison descendante, lorsque le taux de communications de qualité insuffisante dépasse le taux prédéterminé, et/ou
b) sélectionne des terminaux de communication présentant un débit de transmission réductible et fournit en sortie un signal de commande pour ordonner leur transmission à un débit de transmission réduit dans le cas de la commande de débit de liaison montante lorsque le taux de communications de qualité insuffisante dépasse le taux prédéterminé,
**caractérisé par**
un moyen d'acquisition d'informations de qualité (104, 404) qui acquiert des informations sur la qualité de chaque communication avec la pluralité de terminaux de communication, où
a) dans le cas de la commande de débit de liaison descendante, la station de base reçoit le signal indiquant la qualité de liaison descendante transmise par chaque terminal de communication, démultiplexe et extrait le signal démodulé et acquiert les informations de qualité de liaison descendante (rapport SIR, taux BER, taux FER), un bit TPC (commande de puissance de transmission) est utilisé comme indicateur d'informations de qualité de liaison descendante, le bit TPC inclus dans le signal reçu est extrait après démultiplexage du signal reçu et la station de base acquiert les informations de qualité de liaison descendante par le biais du bit TPC extrait, et/ou
b) dans le cas de la commande de débit de liaison montante, la station de base reçoit le signal émis par chaque terminal de communication par l'intermédiaire de la partie de réception radio (402) et acquiert les informations de qualité de liaison montante par l'intermédiaire de la mesure de la qualité (par exemple le rapport SIR) du signal reçu dans sa partie de mesure de qualité reçue (404).

2. Dispositif de station de base selon la revendication 1, dans lequel ledit moyen d'évaluation comprend en outre :
un moyen de comptage (406) qui compte le nombre de terminaux de communication communiquant à un niveau de qualité en dessous d'une norme prédéterminée, et
un moyen d'évaluation de TAUX (407) qui détermine si le nombre de terminaux de communication communiquant à un niveau de qualité en dessous d'une norme prédéterminée dépasse une valeur prédéterminée, et à partir de ce résultat détermine si le taux de communications de qualité dégradée par rapport à toutes les communications sous la commande du dispositif de station de base dépasse le taux prédéterminé.

3. Dispositif de station de base selon la revendication 1 ou 2, dans lequel ledit moyen de comptage (406) affecte une pondération au nombre de terminaux de communication en fonction du débit de transmission.

4. Dispositif de terminal de communication qui communique avec le dispositif de station de base de l'une des revendications 1 à 3, comprenant :
un moyen de détection (505) qui détecte un signal de commande émis depuis le dispositif de station de base pour ordonner de réduire le débit de transmission dans le cas de la commande de débit de liaison montante,
un moyen d'instruction de commutation de débit de transmission (506) qui commute le débit de transmission d'un signal de transmission conformément à l'instruction du signal de commande dans le cas de la commande de débit de liaison montante,
**caractérisé par**
un moyen de mesure de qualité de liaison descendante (204) qui mesure la qualité de liaison descendante reçue (par exemple le rapport SIR, le taux BER, le taux FER) d'un signal émis depuis le dispositif de station de base, génère un bit TPC selon les résultats de la mesure de qualité de liaison descendante reçue et fournit en sortie le bit TPC à la partie de formation de trame de transmission (205) de sorte qu'une trame de transmission comprenant le bit TPC est formée et émise vers la station de base.

5. Procédé de prévention de la dégradation de qualité de canal, comprenant les étapes suivantes :
une étape de communication consistant à communiquer avec une pluralité de terminaux de communication,
une étape d'évaluation consistant à déterminer si un taux de communications de qualité insuffisante sur toutes les communications sous la commande du dispositif de station de base dépasse un taux prédéterminé, en utilisant les informations sur la qualité de chaque communication acquises à partir de la partie de démultiplexage 104 dans le cas de la commande de débit de liaison descendante ou à partir de la partie de mesure de qualité reçue (404) dans le cas de la commande de débit de liaison montante,
une étape de commande de commutation de débit de transmission consistant à
a) fournir en sortie un signal de commande à sa partie de formation de trame de transmission (107) pour la transmission des données à un débit de transmission réduit dans le cas de la commande de débit de liaison descendante, lorsque le taux de communications de qualité insuffisante dépasse le taux prédéterminé, et/ou
b) sélectionner des terminaux de communication présentant un débit de transmission réductible et fournir en sortie un signal de commande pour ordonner leur transmission à un débit de transmission réduit dans le cas de la commande de débit de liaison montante, lorsque le taux de communications de qualité insuffisante dépasse le taux prédéterminé,
**caractérisé par**
une étape d'acquisition d'informations de qualité consistant à acquérir des informations sur la qualité de chaque communication avec la pluralité de terminaux de communication, où
a) dans le cas de la commande de débit de liaison descendante, la station de base reçoit le signal transmis par chaque terminal de communication, démultiplexe le signal démodulé et acquiert les informations de qualité de liaison descendante (rapport SIR, taux BER, taux FER), un bit TPC (commande de puissance de transmission) est utilisé comme indicateur d'informations de qualité de liaison descendante, le bit TPC inclus dans le signal reçu est extrait après démultiplexage et la station de base. acquiert les informations de qualité de liaison descendante par le biais du bit TPC extrait, le bit TPC est généré dans chaque terminal de communication selon les résultats de la mesure de qualité de liaison descendante reçue et fourni en sortie à la partie de formation de trame de transmission (205) de chaque terminal de communication de sorte qu'une trame de transmission comprenant le bit TPC est formée et émise vers la station de base, et/ou
b) dans le cas de la commande de débit de liaison montante, la station de base reçoit le signal émis par chaque terminal de communication par l'intermédiaire de la partie de réception radio (402) et acquiert les informations de qualité de liaison montante par l'intermédiaire de la mesure du rapport SIR, du taux BER, du taux FER, du signal reçu dans sa partie de mesure de qualité reçue (404).

6. Procédé selon la revendication 5, dans lequel ladite étape d'évaluation comprend en outre les étapes suivantes :
une étape de comptage consistant à compter le nombre de terminaux de communication communiquant à un niveau de qualité en dessous d'une norme prédéterminée, et
une étape de détermination consistant à déterminer si le nombre de terminaux de communication communiquant à un niveau de qualité en dessous d'une norme prédéterminée dépasse une valeur prédéterminée, et d'après ce résultat détermine si le taux des communications de qualité dégradée par rapport à toutes les communications sous commande de dispositif de station de base dépasse le taux prédéterminé.

7. Procédé selon la revendication 5 ou 6, dans lequel ladite étape de comptage comprend en outre une étape d'affectation consistant à affecter une pondération au nombre de terminaux de communication selon le débit de transmission.
